(19) **Europäisches Patentamt / European Patent Office / Office européen des brevets**

(11) **EP 1 730 903 B1**

(12) **EUROPEAN PATENT SPECIFICATION**

(45) Date of publication and mention
of the grant of the patent:
**26.10.2011 Bulletin 2011/43**

(51) Int Cl.:
***H04L 12/56*** *(2006.01)*

(21) Application number: **05708627.4**

(86) International application number:
**PCT/IB2005/000514**

(22) Date of filing: **01.03.2005**

(87) International publication number:
**WO 2005/096546 (13.10.2005 Gazette 2005/41)**

(54) **EXPEDITED DATA TRANSMISSION IN PACKET BASED NETWORK**

BESCHLEUNIGTE DATENÜBERTRAGUNG IN AUF PAKETEN BASIERENDEN NETZWERKEN

TRANSMISSION DE DONNEES GARANTIE DANS UN RESEAU A COMMUTATION DE PAQUETS

(84) Designated Contracting States:
**AT BE BG CH CY CZ DE DK EE ES FI FR GB GR HU IE IS IT LI LT LU MC NL PL PT RO SE SI SK TR**

(30) Priority: **01.04.2004 US 558149 P**
**15.06.2004 US 886998**

(43) Date of publication of application:
**13.12.2006 Bulletin 2006/50**

(73) Proprietor: **Nokia Corporation**
**02150 Espoo (FI)**

(72) Inventors:
• **SWAMI, Yogesh Prem**
**Irving, TX 75039 (US)**
• **LE, Khiem**
**Coppell, TX 75019 (US)**

(74) Representative: **TBK**
**Bavariaring 4-6**
**80336 München (DE)**

(56) References cited:
**DE-C1- 19 907 085     US-A1- 2003 182 480**

EP 1 730 903 B1

**Description**

The present invention is related to a method of transmitting data in a packet based network, and/or to a device for controlling a transmission of data in a packet based network, and/or to a communication network system using a corresponding device, and or to a corresponding computer program product. The following specification is in particular directed to a queuing/scheduling mechanism used in a transmission of packets of data for optimizing transmission performance in communication networks.

In the last years, an increasingly extension of data transmission networks, such as the Internet, and communication networks, such as wire based communication networks like the Integrated Services Digital Network (ISDN), or wireless communication networks like cdma2000 (code division multiple access) system, Universal Mobile Telecommunications System (UMTS), the General Packet Radio System (GPRS), or other wireless communication system, such as the Wireless Local Area Network (WLAN), took place all over the world. Various organizations, for example the 3rd Generation Partnership Project (3GPP), the International Telecommunication Union (ITU), 3rd Generation Partnership Project 2 (3GPP2), Internet Engineering Task Force (IETF), and the like, are working on standards for telecommunication network and multiple access environments.

In general, the system structure of such a network is on a client/server basis. In case of a communication network, a subscriber's user equipment, such as a mobile station, a mobile phone, a fixed phone, a personal computer (PC), a laptop, a personal digital assistant (PDA) or the like, is connected via respective transceivers and interfaces, such as an air interface, a wired interface or the like, to an access network subsystem. The access network subsystem controls the communication connection to and from the user equipment and is connected via an interface to a corresponding core or backbone network subsystem. The core (or backbone) network subsystem switches the data transmitted via the communication connection to a destination, such as another user equipment, a service provider (server/proxy), or another communication network. It is to be noted that the core network subsystem may be connected to a plurality of access network subsystems. Depending on the used communication network, the actual network structure may vary, as known for those skilled in the art and defined in respective specifications, for example, for UMTS, GSM, WLAN and the like. Generally, for properly establishing and handling a connection between network elements such as the user equipment and another user terminal, a database, a server, etc., one or more intermediate network elements such as support nodes or service nodes are involved.

TCP/IP (Transmission Control Protocol/Internet Protocol) is a network protocol used on, for example, LANs, WANs and the Internet. With the increasing amount of packet services on wireless systems, the use of TCP on a wireless system increases and in the near future it is believed that a considerable amount of the traffic on a wireless system is based on TCP. Currently a major part of all Internet traffic is based on TCP/IP. In TCP, data is split into what the protocol considers the optimum size chunks to transmit. The chunks are denominated segments and their size must not exceed a maximum constant value (Maximum Segment Size or MSS).

TCP is an end-to-end protocol. Generally, TCP has no advance knowledge of the network characteristics. Thus, it is adapted to adjust the transmission behavior according to the present network conditions. One important feature is the so-called congestion control. Congestion can occur, for example, when data arrives at a network node on a big pipe (fast link) and is to be sent out on a smaller pipe (slower link). Congestion may also occur when multiple input streams arrive at a router or the like whose output capacity is smaller than the total amount of the inputs. In such a case, the incoming data are buffered, for example, in a buffer means of the router or of another network element.

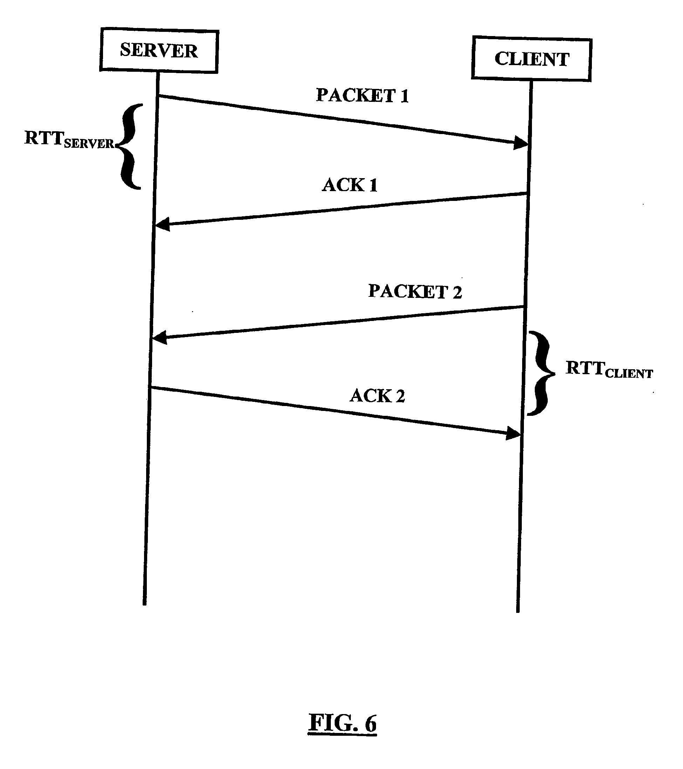

Whenever a segment is transmitted by a server it has to reach a client which acknowledges the transmitted segment. The elapsed time when the server transmits the segment until it receives the corresponding acknowledgment is commonly known as Round Trip Time (RTT). This is shown in Fig. 6 for a segment or packet 1 transmitted from the server to the client and an acknowledgment ACK 1 transmitted from the client to the server. The TCP server holds a variable used to calculate an estimation of a maximum allowed RTT. This variable is called Retransmission Time-Out (RTO). Moreover, the server has a timer that counts the elapsed time since the segment was transmitted. If the corresponding acknowledgment does not arrive at the server before the timer reaches the value of the RTO estimator, the server considers that congestion has occurred in the network and starts congestion avoidance actions.

TCP tries to adapt the transmission rate to the load and capacity of the links of the network. This is done by several mechanisms, like slow start, retransmission timeout, fast retransmission, etc. (see, for example, IETF RFC 2001, "TCP Slow Start, Congestion Avoidance, Fast Retransmit, and Fast Recovery Algorithms", by W. Stevens, January 1997). Fast retransmission and retransmission timeout cause retransmission of TCP/IP packets, when they are lost or delayed more than a dynamic timer RTO. Slow start starts the data transmission slowly and increases the window size gradually in order to adjust the size of the sending window to match the current ability of the network to deliver segments (or packets). Slow start is generally used at the start of a connection, at the expiry of the retransmission timer, and/or after a long passive TCP phase.

In the following, TCP performance in cellular networks is contemplated. As mentioned above, TCP is a transport layer protocol that uses rate of arrival of ACKs to gradually utilize network capacity. In addition, TCP starts with a very low throughput during its slow-start period, which occurs at the start of the connections and sometimes, during the connection. In cellular networks, due to low bandwidth and high bit error rates on the radio interface, the rate at which ACKs are received is extremely slow. This means that a TCP sender will require a long time to reach a reasonable throughput during the slow-start period.

One typical implantation for networks using TCP is to use a so-called first-in first-out (FIFO) algorithm for transmitting TCP data and ACK packets in the network. In cellular networks, due to the low link data rate, the network queues may become large. In such cases, the network behavior caused by the FIFO processing may excessively delay the transmission of the ACK so that a TCP sender is prevented from reaching a sufficient throughput in a reasonable time.

As described above, TCP slow start may occur at the start of the connection and whenever there is a timer timeout. The goal of slow start is to start with a small data rate to make sure that the network can accommodate at least a very little amount of data. This is done in order to avoid network congestion. TCP then relies on the rate of arrival of ACKs to gradually increase its data rate until it reaches a reasonable throughput.

In cellular networks, however, due to small bandwidth and high bit error rate, often the round trip time (RTT) of the connection is large. This means that the rate at which ACKs are received is very slow since after sending a window of data the sending side needs to wait one RTT until it receives any acknowledgement. Due to this, the TCP sender may waste a long time in slow-start mode before it can reach a reasonable throughput. This may be experienced by a user as degraded service experience. It is to be noted that in the network all packets of a connection received by a network node which has to forward the data arrived via the connection are queued in (or enqueued) with all packets/data received from other connections arriving at this network node. This means that the RTT during slow start has a strong component of the queuing delay coming from other connections.

There have been made several attempts for solving the problem of accelerating the data transmission rate of connections. In general, either the intention has been to increase the data rate at the start of the connection or to reduce the RTT of a connection.

With regard to the slow start condition of a connection, in order to reduce the time taken by the slow start on long delay paths, it is tried, for example, to change the window increase algorithm of TCP. One example for this is to use a larger window than one packet at the beginning of slow start, wherein an initial window of maximum 4 packets has been proposed. Another example is defined as packet spacing, e.g. Rate Based Spacing, where the source transmits directly at a large window without overloading the network. A further approach on the network side is to establish many parallel TCP connections for the same transfer, which however is problematic when only a limited transfer capacity is available, and which also increases the overall load of the network.

There has been proposed a scheduling/queuing alorithm called Queue Length based Weighted Fair Queuing (QLWFQ) Algorithm. Generally, by means of a weighted fair queuing algorithm, data to be transmitted by one network node and coming from different sources are priorized in order to ensure that each connection is treated in a fair way, i.e. that data of each connection are transmitted in a reasonable time period. In case of the QLWFQ, the packets are scheduled (allocated to a priority) so that the longest queue gets a higher priority. However, the weighted fair queuing is generally independent of connection level information so that changes in a TCP connection are not considered.

Document DE 199 07 085 C1 discloses a method of transmitting packet data in a radio communications system. Data packets of several connections (bearers) are transmitted between a base station and a mobile station via a radio interface. On the transmitter side, an individual queue is designated for each connection for the data packets to be transmitted. The sequence of transmission of data packets from the queues is determined in accordance with parameters pertaining to individual queues. The priority of queues with data packets to be transmitted repeatedly is higher than that of queues without data packets to be transmitted repeatedly.

It is a general purpose of the present invention to provide a new mechanism by means of which an improved forwarding/transmission of packet based data in a communication network is achievable.

In detail, it is an object of the invention to provide an improved mechanism for queuing/scheduling data for an expedited transmission via a packet based communication network.

This object is achieved by a method of forwarding data in a packet based network according to claim 1 and a device for controlling forwarding of data in a packet based network according to claim 12, a communication network system according to claim 24 and a computer program product according to claim 27.

Advantageous further developments are as set forth in the respective dependent claims.

By virtue of the proposed solutions, the following advantages can be achieved:

- One of the proposed mechanisms requires no change to TCP sender or receiver. On the other hand, the other one of the proposed mechanisms requires no change in the existing network infrastructure.
- The user experience is improved since the slow start period is reduced. At the start of a connection, the buffer occupancy of a slow starting connection is often much smaller than that of other connections. By giving higher priority to those connections which have lower buffer occupancy (i.e., by scheduling packets in slow start ahead of other connections) the RTT period can be reduced. On the other hand, once the connection reaches a buffer occupancy at par with other connections, each connection gets the same share of resources. This is very useful for cellular networks where the RTT is very large and slow starting connections spend a long time before getting a fair share of bandwidth.

- The proposed mechanism is able to follow changes in a connection level. This means that, for example, the priority of a TCP connection changes as the connection proceeds, i.e. when a greater part of the buffer is required due to a higher data amount of that connection.

- The proposed mechanism is applicable in a plurality of applications. For example, the mechanism is effective in connection with terminals which support "rich call" applications ("rich call" describes the combination of different media types like speech, video and multimedia messaging in one call) and multiple concurrent applications. The mechanism is also applicable in connection with different network access technologies, such as HSDPA (High Speed Downlink Packet Access) and GPRS (General Packet Radio Service). Additionally, it is implementable in various network node types, like core network nodes such as SGSN (Serving GPRS Support Node), IP routers, radio access network elements and the like.

- By means of the proposed mechanisms, the data throughput in congestion avoidance at the network side and/or the server (sender) side is improved.

The above and still further objects, features and advantages of the invention will become more apparent upon referring to the description and the accompanying drawings.

Fig. 1 shows a device for controlling a data transmission according to a first embodiment of the invention;

Figs. 2 and 3 show a flow chart illustrating a scheduling mechanism according to one example of the first embodiment of the invention;

Figs. 4 and 5 show a flow chart illustrating a scheduling mechanism according to another example of the first embodiment of the invention;

Fig. 6 shows a diagram for illustrating round trip time (RTT);

Fig. 7 shows a signaling diagram;

Fig. 8 shows a diagram illustrating a model of a scheduling mechanism according to one example of a second embodiment;

Fig. 9 shows a flow chart illustrating a scheduling mechanism according to one example of the second embodiment; and

Fig. 10 shows a flow chart illustrating a scheduling mechanism according to another example of the second embodiment.

In the following preferred embodiments of the invention are described in detail with reference to the drawings. It is to be noted that the invention is not confined to the examples presented herein below but may enclose also other examples as mentioned later.

FIRST EMBODIMENT

According to the first embodiment, in general, in the proposed transmission control mechanism, a preferential treatment is given to flows/connections that transmit a smaller amount of data in comparison to other flows/connections. This is in particular effective in connection with a network node of a cellular network close to the access link, such as a SGSN in case of GPRS or the like, since at this place in the end-to-end transmission path a "bottleneck" may be established due to the fact that most of the transmission buffering takes place there. In particular, an efficient queuing/ scheduling algorithm is used that can expedite, for example but not exclusively, the slow start of a connection. This is based on the observation that at the start of the connection the buffer occupancy of a slow starting connection is much smaller than that of other connections. Therefore, by giving higher priority (i.e., by scheduling packets in slow start ahead of other connections) to those connections, which have lower buffer occupancy, the round trip time (RTT) is reduced and the time period until a reasonable throughput is achieved for the respective connection is shortened.

Once the connection reaches a buffer occupancy level at par with other connections, each connection gets the same share of resources.

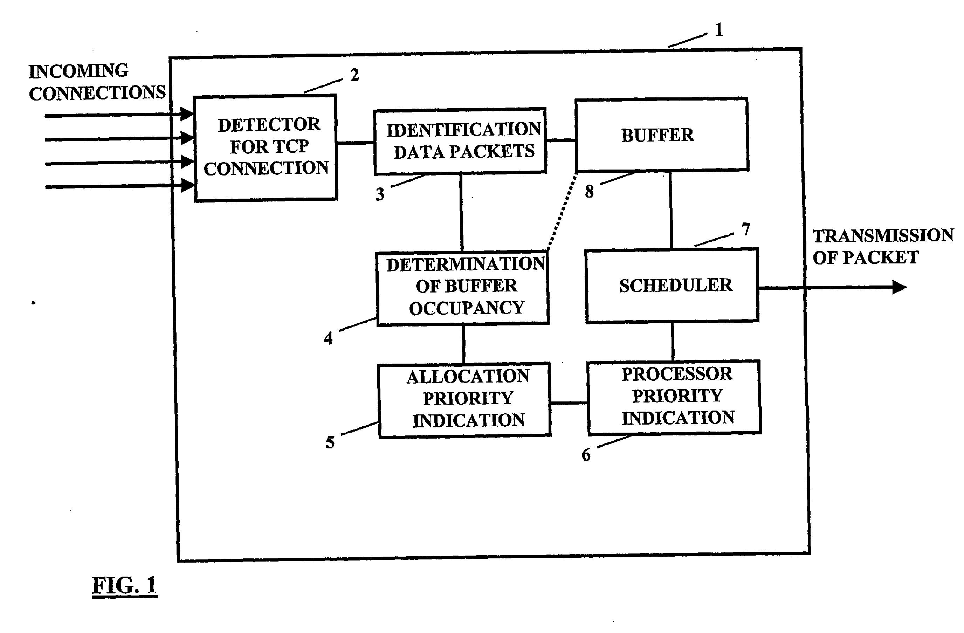

In Fig. 1, an example for a device 1 implementing such a scheduling mechanism is shown.

The device 1 may be part of a network node, for example, of the access network subsystem or of the core network subsystem, like a wireless network node (e.g. SGSN) or a router. Even though in Fig. 1 separate means for illustrating the different functions of the mechanism are shown, it is to be noted that these functions can be implemented by software and executed by one or more parts of the network node, such as by a central processing unit (CPU) and memory means thereof. The network nodes in which the proposed mechanism is implementable may comprise for executing their respective functions several means which are required for control and/or communication functionality. Such means are, for example, a processor unit for executing instructions and processing data (for example, transmission content and signaling related data), memory means for storing instructions and data, for serving as a work area of the processor and the like (e.g. ROM, RAM, EEPROM, and the like), input means for inputting data and instructions by software (e.g. floppy diskette, CD-ROM, EEPROM, and the like), user interface means for providing monitor and manipulation possibilities to a user and/or an operator (e.g. a screen, a keyboard and the like), and interface means for establishing a communication connection under the control of the processor unit (e.g. wired and wireless interface means, an antenna, and the like).

It is to be noted that in the following the terms "node", "router" or "network node" concern all one and the same network element implementing the proposed scheduling mechanism.

According to Fig. 1, the device 1 comprises a detector (detecting means) 2 for detecting connections of a specific type from a plurality of incoming connections. The detector is adapted to detect, for example, TCP connections. Furthermore, the device 1 comprises identifying means 3 for identifying data packets of flows incoming via a specific TCP connection. Such an identification of a flow may be achieved on the basis of port numbers, source and destination IP addresses or Ipv6 flow labels, for example. The data packets are forwarded to a buffer 8 buffering the packets of each connection for a subsequent transmission (to be described later). In a determining means 4, the buffer occupancy of each TCP connection, i.e. the length of the flow specific buffers contained in the buffer 8 for each of the TCP connections, is determined and a corresponding buffer occupancy level is defined on this basis. An allocating means 5 uses the buffer occupancy level of the TCP connection for allocating a priority indication to the TCP connection. This is done in a manner that a smaller buffer occupancy level leads to a higher priority indication, while a greater buffer occupancy level leads to a lower priority indication for the respective connections. In a processor (processing means) 6, the allocated priority indications for each of the connections are used for a processing. In this processing, a ranking for the connections is generated which is used for deciding on which of the connections is preferred for a transmission of the data packets thereof buffered in the queues. In a scheduler (scheduling means) 7 a scheduling processing is performed for scheduling (or enqueuing) the data packets stored in the buffer 8 on the basis of the priority indication allocated to the TCP connections. In other words, the scheduler 7 selects a respective TCP connection on the basis of the priority indications and transmits a predefined amount of data of the selected TCP connection from the buffer to a destination, such as another network node or a terminal unit.

Preferably, the priority indication (and thus the ranking) of the TCP connections is only changed (or re-computed) when a new data packet is received by the network node (and thus the device 1) via one of the detected TCP connections. Furthermore, when a new TCP connection is established to or via the network node, the device 1 is also acting for enqueing this new connection in the already existing ones.

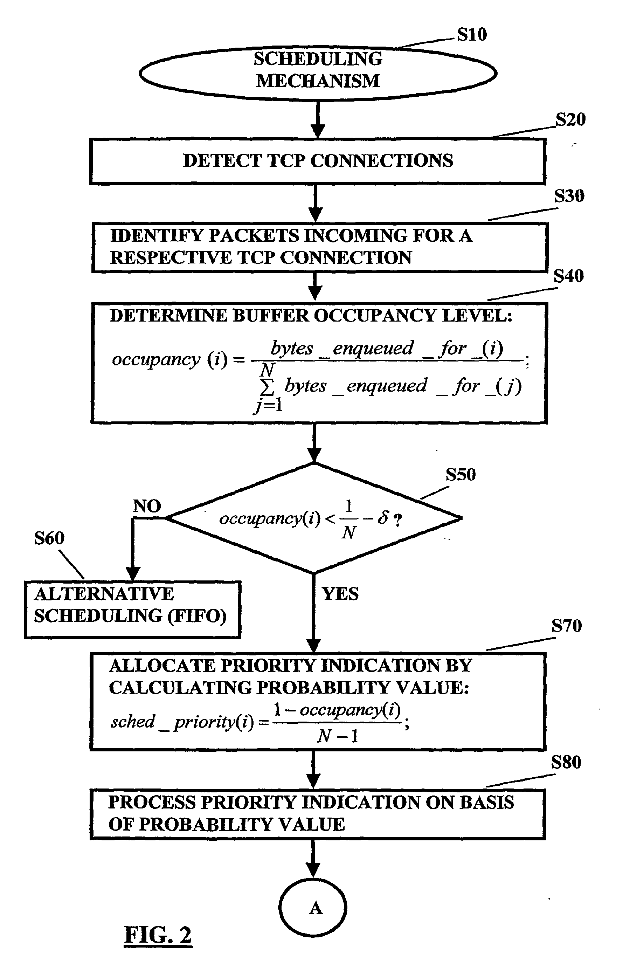

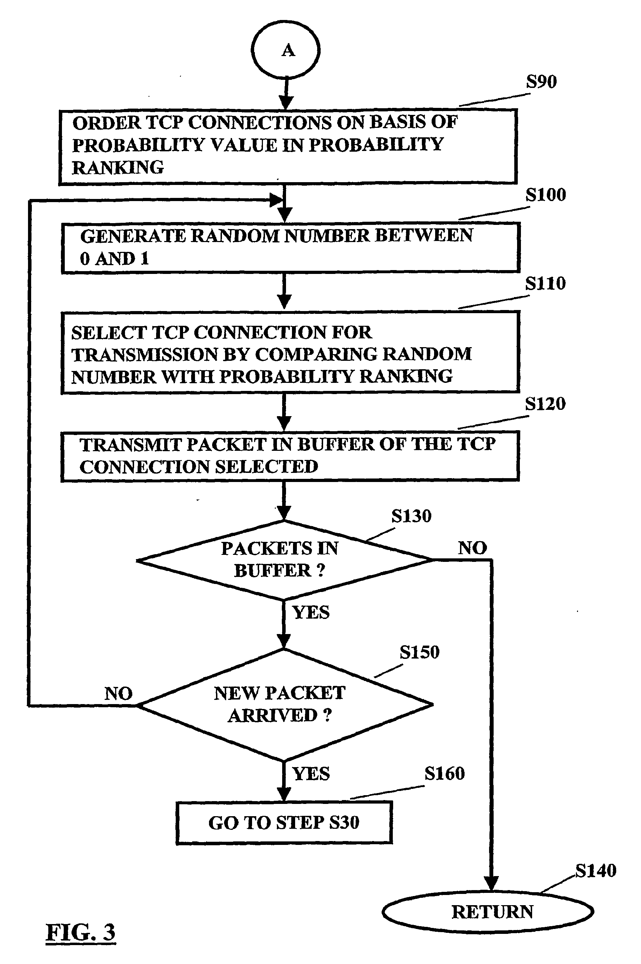

Next, a first example for a scheduling mechanism performed by the device 1 is described with reference to a flow chart according to Figs. 2 and 3.

When the scheduling mechanism is started in step S10, TCP connections to the network node/router are detected in step S20. In step S30, data packets incoming via a respective TCP connection are identified as belonging to this connections and stored in the flow specific buffer 8 of the network node.

Then, in step S40, the buffer occupancy level of the respective TCP connections is determined. In other words, the amount of data of each connection stored in the buffer and waiting to be enqueued is calculated. According to the present example, when the node receives a data packet via a respective TCP connection, for example connection i, the buffer occupancy of that connection is computed, for example, by finding out the fraction of buffer space this connection is using as follows

$$occupancy(i) = \frac{bytes\_enqueued\_for(i)}{\sum_{j=1}^{N} bytes\_enqueued\_for(j)};$$

where i indicates a respective TCP connection, occupancy(i) indicates the buffer occupancy level of the connection i, "bytes_enqueued_for" indicates the number of bytes of a respective connection enqueued in the buffer 8, and N indicates the total number of the plurality of TCP connections arriving at the network node with a non-zero buffer occupancy.

In a subsequent step S50, it is decided whether the buffer occupancies of the connections arriving at the node are so different that a special scheduling algorithm is to be executed or not. This is based on comparing the occupancy level of the respective connection I with a predetermined parameter δ in the form of a relation

$$occupancy(i) < \frac{1}{N} - \delta;$$

where δ is satisfying the relation

$$0 < \delta < \frac{1}{N}$$

for any of the connections (i.e. for any i).

Here δ is a configurable parameter by means of which it can be considered that if all of the connections have approximately the same occupancy level then there is no need for preferential treatment. The parameter δ can be defined, for example, during the operation of the network element or at the initialization period thereof. The selection of a specific value of δ may consider the network capability, the transmission link capability (size of the transmission pipe) of the respective network node, and the like. For example, when the capability of the network or the network node is quite high, greater differences between the buffer occupancies of the respective connections may be allowable.

When the decision in step S50 is NO, i.e. the connections have approximately the same occupancy level, step S60 follows in which an alternative or native scheduling algorithm is used for scheduling the data packets of the connections. Preferably, this alternative scheduling algorithm may use, for example, a FIFO (First In, First Out) scheduling. It is to be noted that the algorithm is preferably executed at the time of a connection setup. Once the connection has entered the equal priority state, the above described mechanism may be stopped.

On the other hand, when the decision in step S50 is YES, step S70 follows.

On the basis of the buffer occupancy level of each connection, a priority indication for each connection i is determined. In this example, in step S70, a probability value indicating a probability of sending a packet from any of the N connections is computed for each connection i by using an equation

$$sched\_priorty(i) = \frac{1 - occupancy(i)}{N - 1} .$$

The parameter *sched_priority* is the probability of sending a packet of the connection i. In step S80, the priority indication of each connection is processed by using the probability value *sched_priority* of a respective connection. In detail, the respective connections are pre-ordered with regard to the probability value, starting with the connection having the highest probability value (i.e. the connection having the smallest buffer occupancy level) and ending with the connection having the lowest probability value (i.e. the connection having the highest buffer occupancy level). Then, in a following step S90, the connections are ordered in a probability ranking beginning with the connection having the highest probability value. The next connection in the ranking is the connection being placed in the second place of the pre-ordering in step S80, wherein a priority indication thereof is calculated by adding the probability value of this connection (the second connection), and that of the connections before (here only the first connection). Thus, the last connection ordered in the ranking in step S90 has a priority indication of 1,0.

For better understanding the functions of steps S70 to S90, a concrete example is given herein below. Assuming there are three TCP connections 1, 2, 3 arriving at the node. According to the buffer occupancy of each of these connections, it is determined that the respective probability values *sched_priority* are 0.33 for connection 1, 0.2 for connection 2 and 0.47 for connection 3. Then, the connections are ordered in a ranking as connection 3(0.47), connection 1(0.8), and connection 2(1.0). It is to be noted that the numbers in bracket show the probability range from a higher priority connection, i.e. they define what the cumulative probability of a given priority level is. This means, for example, that if the highest probability for rank-1 (connection 1 in the case described above) was 0.47 and the occupancy sched priority for rank-2 (connection 3 in the case described above) was 0.33, then the number in the brackets for connection 1 is 0.47 + 0.33 = 0.80. Similarly, for ran-3, the number in the brackets is 0.8 + 0.2. In other words, the number in the brackets gives the range from 0 to 1 for random numbers that can be used for scheduling. If the random number is 0.9, for example, it can be recognized to lying between 0.8 and 1.0 so that it is determined that rank-3 is to be scheduled. If the random number, as another case, would be 0.4, the rank-1 connection is to be scheduled.

When the data packets in the buffer 8 are to be scheduled for transmission, in step S100, first a random number between 0 and 1 is generated by a random number generator (not shown). This is done, for example, in the scheduler 7 according to Fig. 1. Then, in step S110, the random number generated is compared with the probability ranking of the connections, i.e. the priority indications thereof, and one of the connections is selected on the basis of this comparison. For example, the selection is based on a result that the ranking of the connection is greater than the random number and closest to the random number. However, also another criteria is possible, such as just being smaller than the random number, or the like.

Referring to the above concrete example, assuming that the random number generated is 0.7, which lies between 0.47 (connection 3) and 0.8 (connection 1), the node schedules a data packet from connection 1.

When the connection (i.e. the data packet) is selected, the packet is transmitted from the buffer to the respective destination indicated by the TCP connection (step S120).

The scheduling mechanism is continued in the network node on the basis of the calculation effected in steps S70 to S90. In detail, in step S130, it is checked whether or not data packets are present in the buffer. If no packets are present anymore, the scheduling mechanism is restarted, i.e. the arrival of new packets is awaited (step S140).

On the other hand, when packets are present in the buffer 8, step S150 is executed in which it is checked whether a new packet has been arrived for one of the TCP connections. If no new packet is received at the network node, the processing is repeated from step S100. On the other hand, if at least one new packet is received which belongs to one of the TCP connections, the processing is repeated from step S30 onwards (step S160).

According to the steps S130 and S150, the node continues scheduling based on the calculation of the current priority indication (ranking) which means that the ranking of each connection is unchanged after the packets are sent out. The ranking of the connections is changed only at the time new packets arrive at the node. Furthermore, due to randomisation of each connection in steps S100 and S110, none of the connections is starved. In addition, the ranking of a connection does not change after sending the packet. This means that as the packets are being sent, the connection does not keep getting higher priority. It is to be noted that since rankings are done only at the time when packets arrive, there is relatively smaller burden on the node to compute and reorder packets.

Preferably, when all packets buffered for one connection are already sent out, this TCP connection is cancelled from the ranking established in step S90 in order to not constrain the transmission of packets of the other connections still having packets to be sent. The corresponding determination of the zero buffer occupancy of such a connection may be executed in connection with step S130, for example, or in a separate step (not shown). This could also be based on an expiry of a timer which indicates that a connection has a zero buffer occupancy for a predetermined period of time and could thus be disabled.

The scheduling mechanism according to Figs. 2 and 3 is advantageous in that the slow started connection is expedited fast.

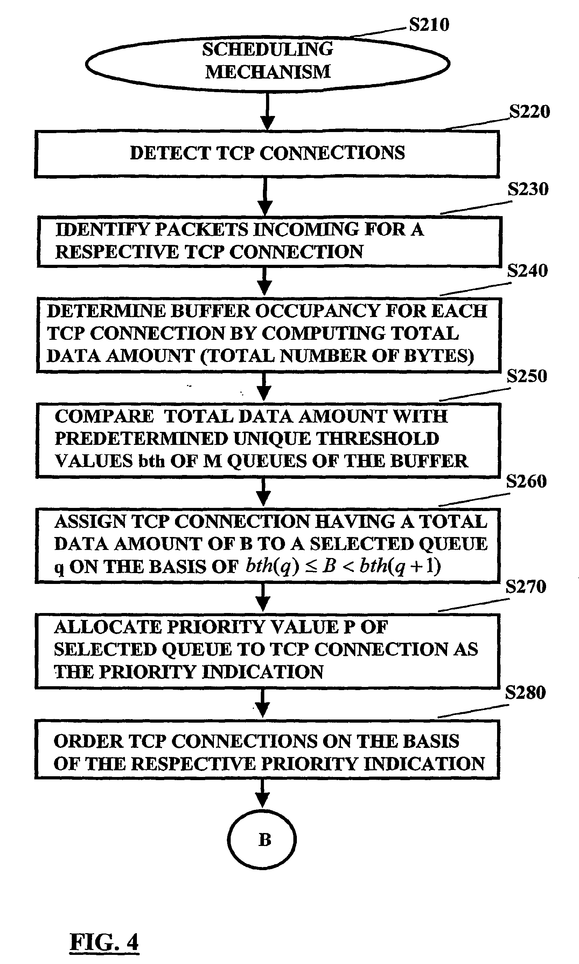

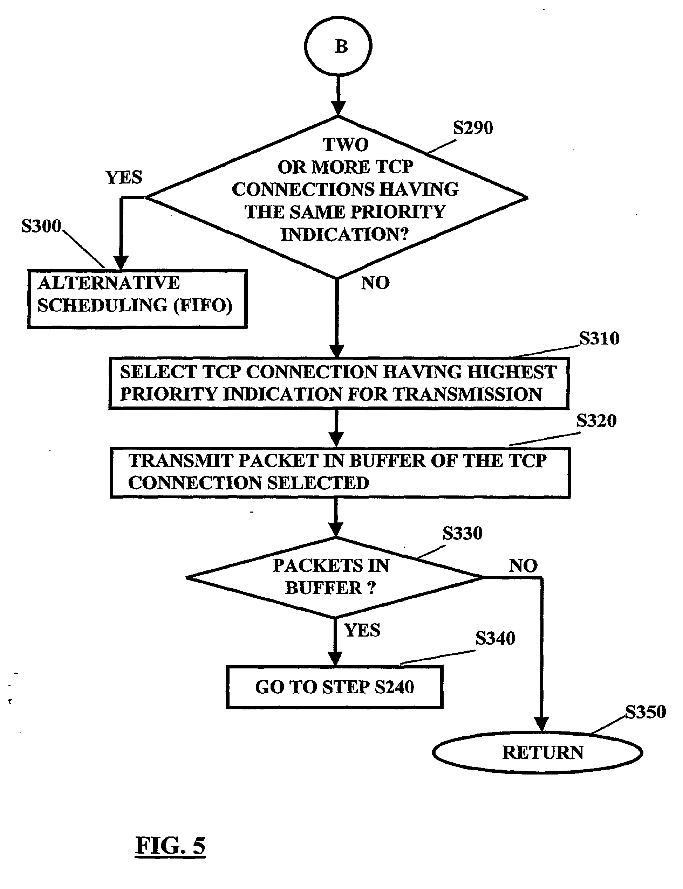

Next, a further example of a scheduling mechanism according to the first embodiment is described with reference to the flow chart according to Figs. 4 and 5.

After starting the scheduling mechanism according to this example in step S210, a detecting step S220 and an identifying step S230 are executed which correspond to steps S20 and S30 according to Fig. 2 and are thus not described in detail herein below.

In step S240, the buffer occupancy levels of the TCP connections are determined. In other words, the total amount of data of each connection stored in the buffer 8 and waiting to be enqueued is calculated. According to the present example, when the node receives a data packet belonging to a respective TCP connection, the total number of bytes of the respective connection is calculated.

According to the present example, the network node is prepared by keeping (virtual) queues j (j = 1, 2, 3, ..., M-1, M) for grouping the buffer space of the buffer 8. Assigned to each queue there is defined a unique predetermined priority value P(j) wherein the queue j has a higher priority value than the queue j+1. Furthermore, a unique predefined byte-threshold value bth(j) is associated with each queue, where bth(j) is smaller than bth(j+l). The threshold value bth is used for a comparison with the total data amount of the respective connections arriving at the network node and is used for an assignment of a connection to one of the queues 1 to M.

According to this, in step S250, the total data amount calculated in step S240 is compared with the unique predefined byte-threshold values bth of the network node. Then, in step S260, one of the queues is assigned to the connection on the basis of a relation

$$bth(j) \le B < bth(j+1);$$

where B is the calculated total number of bytes of the respective connection in the network node. The respective connection is assigned to that queue whose threshold value is smaller or equal to the total data amount B, i.e. to queue j.

When the assignment of the respective connection to one of the queues is effected, in step S270, the unique priority value of this queue is allocated to the connection as the priority indication thereof. This means, according to the assignment of bth(j) for B, the priority indication for that connection has the value of P(j).

In step S280, the TCP connections are ordered in a ranking on the basis of the allocated priority indications.

Then, in step S290, it is checked whether two or more connections are allocated to the same priority indication, i.e. assigned to the same queue. If this is the case (YES at step S290), step S300 is executed where an alternative scheduling algorithm is chosen for the scheduling of the data packets of at least those connections having the same priority indication. This alternative scheduling mechanism is based, for example, on an heuristic scheduling algorithm such as FIFO queuing.

On the other hand, when the decision in step S290 is NO (the connections have different priority indications), step S310 is executed where the TCP connection having the highest priority indication is selected first for a transmission of data packets thereof. On the basis of this selection, a data packet of the selected TCP connection is chosen from the buffer 8 and scheduled for the transmission to the destination indicated by the respective TCP connection (step S320).

Then, in step S330, it is checked whether further data packets are waiting to be scheduled in the buffer 8. If no packets are present anymore, the scheduling mechanism is restarted, i.e. the arrival of new packets is awaited (step S350).

On the other hand, when packets are present in the buffer 8, step S340 is executed in which the processing is repeated from step S240 onwards.

Preferably, when all packets buffered for one connection are already sent out, this TCP connection is cancelled from the ranking established in step S280 in order to not constrain the transmission of packets of the other connections still having packets to be sent. The corresponding determination of the zero buffer occupancy of such a connection may be executed in connection with step S330, for example, or in a separate step (not shown). This could also be based on an expiry of a timer which indicates that a connection has a zero buffer occupancy for a predetermined period of time and could thus be disabled.

The scheduling mechanism according to the example of Figs. 4 and 5 is advantageous in that it does not involve a high computation load which is very desirable by high-speed routers.

As mentioned above, the scheduling mechanism according to the example of Figs. 2 and 3 is computationally more expensive, but it expedites the slow started connection much faster than the scheduling mechanism according to the example of Figs. 4 and 5 which is advantageous in that it is computationally less expensive but less efficient in comparison to the first scheduling mechanism.

Thus, as a further alternative for implementing the proposed scheduling mechanisms in a network node, for example, the scheduling mechanism defined in connection with Figs. 2 and 3 can be combined with the scheduling mechanism defined in connection with Figs. 4 and 5 in such a way that a selection between the two scheduling mechanisms is performed. Such a selection may be based, for example, on the number of TCP connections at the network node. When this number of TCP connections is smaller than a predetermined threshold value, for example, the scheduling mechanism defined in connection with Figs. 4 and 5 is executed, and when the number of TCP connections is greater than a predetermined threshold value, for example, the scheduling mechanism defined in connection with Figs. 2 and 3 is executed, or vice versa. A corresponding selection step can be introduced, for example, after the identification of the data packets (steps S30 and S230, respectively).

It is to be noted that as a further advantage of the first embodiment described above, at least implicitly, TCP ACK packets are prioritized when they are belonging to a slow starting connection. For expediting the slow start, the transmission of the ACK packets may be of importance.

The scheduling mechanisms defined above are preferably implemented in SGSN or any IP router. The schemes can work along with Weighted Fair Queuing (WFQ) techniques, but they can also work in conjunction with other queuing disciplines.

SECOND EMBODIMENT

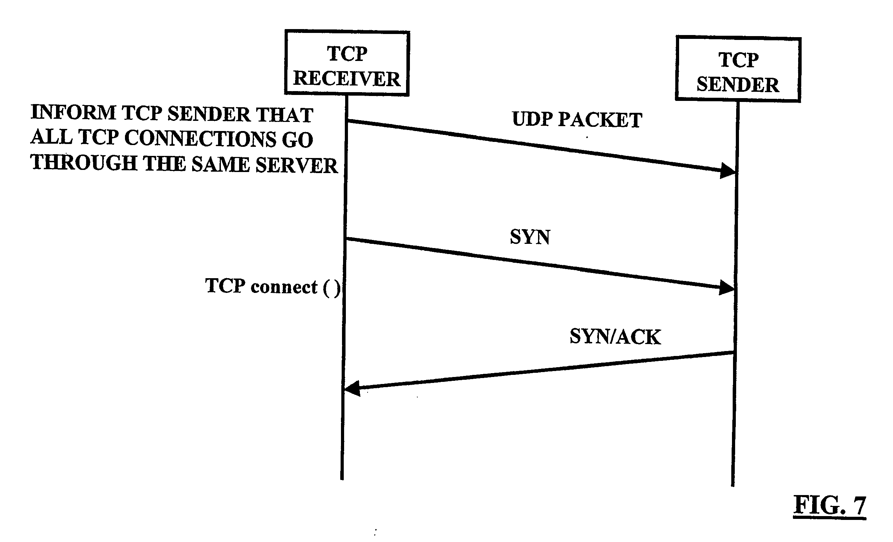

Next, a further embodiment of the present invention will be described with reference to Figs. 7 to 10.

In contrast to the first embodiment where the increase the throughput is achieved by using a weighted fair queuing (WFQ) mechanism in a network node being part of the network infrastructure (in particular for expediting slow start), according to the second embodiment, a mechanism is described which enables a prioritised scheduling at a TCP sender, such as a mobile station, a server and the like. By means of this, the dependency on a network implementation is avoided.

Usually, at the TCP sender side, the sender (or server) recognizes a relatively high-speed link, at least in comparison to a cellular link bottleneck like a network node (e.g. the SGSN) where most transmission buffering takes place. Therefore, on the sender side, usually no transmission buffering is performed (however, it is to be noted that a copy of the transmitted data/packets may be kept for possible retransmission). Conventionally, since there is no packet in the transmission buffer to preempt, a prioritised scheduling is not performed.

According to this embodiment, in general, the server emulates the link speed by delaying each packet by an amount based on [packet size / link speed] before transmitting it. With such a link speed emulation (LSE), a transmission buffer is established at the server side so that a prioritised scheduling is possible.

It is to be noted that for the implementation of the scheduling mechanism according to the second embodiment, it is necessary that at least one network node of the involved transmission network infrastructure, such as a network node where transmission buffering of data to be transmitted via the network, like a SGSN in case of a GPRS based network infrastructure, is provided with a per mobile station (MS) buffer.

With reference to Figs. 7 to 9, a first example of the second embodiment is described.

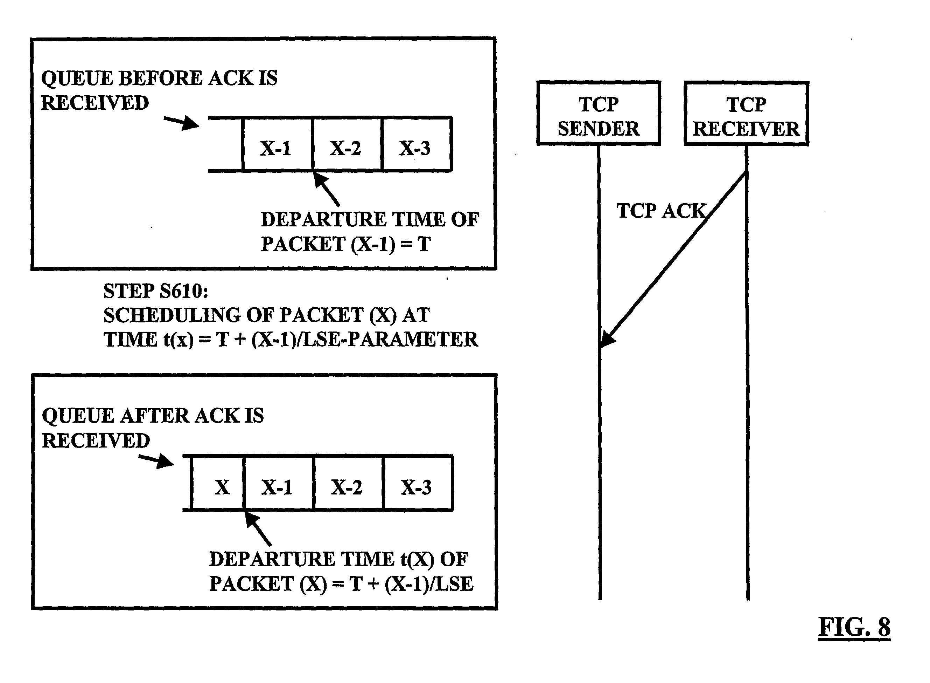

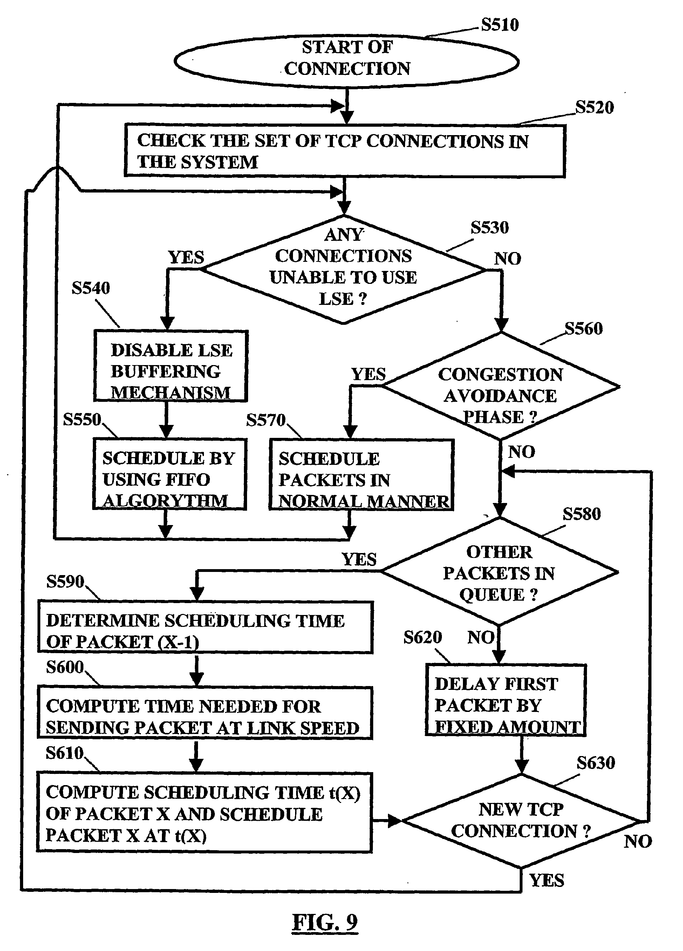

In Fig. 7, a signalling diagram between a TCP sender and a TCP receiver is shown for illustrating a start of a TCP connection. In Fig. 8, a diagram is shown illustrating a model of a scheduling mechanism applied in a TCP sender according to a first example of the second embodiment. In Fig. 9, a flow chart for illustrating the scheduling mechanism according to the first example of the second embodiment is shown.

Referring to Fig. 7, the start of a connection can be defined as the time when the TCP sender or receiver sends a respective SYN packet (step S510, Fig.9). At the starting phase of the connection, according to the scheduling mechanism of the second embodiment, the TCP sender (or receiver) checks whether there are other connections (such as TCP connections) in the system, and if so, whether or not the set of the other TCP connections in the system comprises any connections (i.e. other TCP connections) that are communicating with a type of TCP sender/receiver which is not capable to execute the scheduling mechanism according to the second embodiment as described below (steps S520, S530 in Fig. 9). This checking may be achieved, for example, by using a signalling mechanism, such as UDP (User Datagram Protocol) applications which are running on the two end points (sender, receiver) of the connection. By means of such a signalling mechanism, information about the ability of performing the scheduling mechanism according to the second embodiment can be exchanged, for example by sending from one of the sender/receiver nodes to the other one a UDP packet comprising a corresponding information that all TCP connections use the same server, or by sending a request and by answering that request with a corresponding acknowledgement (ACK) message. In case the information or the ACK is not received, it is to be assumed that the corresponding answering node is not able to perform the proposed scheduling mechanism.

If the sender and/or receiver determine that there are other connections not using the scheduling mechanism according to the second embodiment, then the TCP sender must not enable the scheduling described below. In detail, the LSE buffering is disabled for both the sender and the receiver (step S540 in Fig. 9) and the packets are scheduled for the transmission by means of a default scheduling mechanism, such as one based on a FIFO algorithm (step S550 in Fig. 9).

It is to be noted that, if anytime during the connection (i.e. after the start of the connection for which a LSE buffering is determined to be possible according to step S530), the sender or receiver realizes that there are other TCP connections that are not using this scheduling mechanism, the scheduling mechanism is also to be disabled, preferably as soon as possible, for example, by sending a corresponding UDP packet to the server. This will be further defined in connection with step S630 of Fig. 9 described below.

One advantageous way to implement the feature of checking the ability of connections and disabling the LSE buffering is, for example, to require all TCP senders capable of using the LSE buffering to join a Multicast group. In such a case, for example a mobile (as one end-point of the connection) just sends the first UDP packet to this multicast group. By means of this it is not necessary that the end-point node, like the mobile, knows the exact IP address of the server or an involved Performance Enhancing Proxy (PEP). However, in such a case, it is to be noted that the PEP should only send a unicast response to the mobile.

Furthermore, in case the scheduling mechanism based on the LSE buffering is disabled in step S540, the usage of a FIFO based scheduling mechanism in step S550 is advantageous in that any packet reordering issue which might cause a TCP sender to trigger spurious retransmit (which in turn may degrade the performance) is prevented. On the other hand, packets that are already ahead of the queue might delay some the new packets.

On the other hand, when it is determined in step S530 that all connections use the LSE buffering based scheduling mechanism according to the second embodiment, step S560 in Fig. 9 is executed. In step S560, it is checked whether the sender node (TCP sender) is in a congestion avoidance phase. This can be discriminated, for example, by detecting whether a congestion window of the connection is smaller than SS_THRESH value.

If the determination in step S560 is YES, step S570 is executed in which a scheduling (i.e. of data and ACK packets) is performed in a normal manner, for example by using the FIFO based scheduling or a scheduling based on the first embodiment.

After both steps S550 and S570, the process returns to step S520.

If the determination in step S560 is NO, i.e. the TCP sender is not in a congestion avoidance phase, step S580 follows.

In step S580, for scheduling the packets of the connections, it is determined whether or not the current packet, i.e. the packet currently to be enqueued in a transmission queue of the TCP sender, is the first packet. In other words it is checked in step S580 whether or not there are other packets in the queue.

If the decision in step S580 is NO, i.e. there are no other packets in the queue, step S620 is executed in which the transmission of this first.packet is delayed in the TCP sender by a fixed amount of time. Typically, the amount of time is in the order of 100ms or the like. Then step S630 is executed which will be described below.

On the other hand, if the decision in step S580 is YES, i.e. there is at least one packet ahead of the current packet in the queue, steps S590 to S610 are executed. Generally, according to these steps S590 to S610, the current packet is scheduled at a time so that the entire queue ahead of it gets empty at the data rate of an emulation of the link speed (LSE) of the connection. This is also illustrated in Fig. 8. According to Fig. 8, a model for the LSE based scheduling at the TCP sender and how the queues are maintained is shown.

After the ACK from receiver is received (Fig. 8), the sender determines the scheduling time (or departure time) of a preceding packet (X-1) in the queue, which time is referred to also as T. This is executed in step S590. It is to be noted that the preceding packet (X-1) may also belong to a different TCP connection.

Then, in step S600, the time which is required for sending the preceding packet (X-1) at the link speed of the connection is computed in the sender.

In the following step S610 the scheduling time for the current packet X is computed on the basis of the scheduling time of the preceding packet (X-1), a packet size of the preceding packet (which is to be detected by the sender or can be derived from information contained in the preceding packet (not shown)) and a LSE-parameter to be set. In other words, a scheduling time for the packet X is calculated in the form

$$t(X) = T + pkt\_size \ (X-1)/LSE,$$

where pkt_size (X-1) is a value indicating the size of the preceding packet (X-1) and LSE is a value for the link speed emulation.

The value of LSE is, for example, the maximum link speed of the connection. Furthermore, the LSE value is derived from the estimated Round Trip Time (RTT) for the connection, wherein it is calculated by means of

$$LSE = congestion\_window/RTT,$$

where congestion_window is the TCP's window size for the connection whose packet is to be scheduled.

When the scheduling time t(X) is calculated, the sender schedules the packet X such that by the time the packet (X-1) reaches the receiver, the packet X is next to be sent. This is also shown in lower box in Fig. 8.

Preferably, TCP nodes using the scheduling mechanism described above are adapted to identify ACK packets and to send the identified ACK packets as soon as possible. However, the treatment (i.e. the transmission) of ACKs may be subject of specific protocol rules which is the case in TCP where a so-called delayed ACK rule is to be followed. Thus, such sending rules are only for scheduling, while the protocol logic is not to be changed.

When the scheduling time of the current packet is determined, either in step S610 or S620, step S630 follows in which it is checked whether any new connection is established at the sender and/or the receiver. If the decision in step S630 is NO, i.e. no new connections are detected, the process returns to step S580 in order to process remaining packets. On the other hand, when the decision in step S630 is YES, i.e. there is at least one new connection, the process returns to step S530 in order to check whether the new connection(s) is/are using the LSE buffering. This is to be performed in order to ensure that the LSE buffering is disabled when any of end nodes (sender/receiver) for the set of established connections is not able to perform the scheduling mechanism described above.

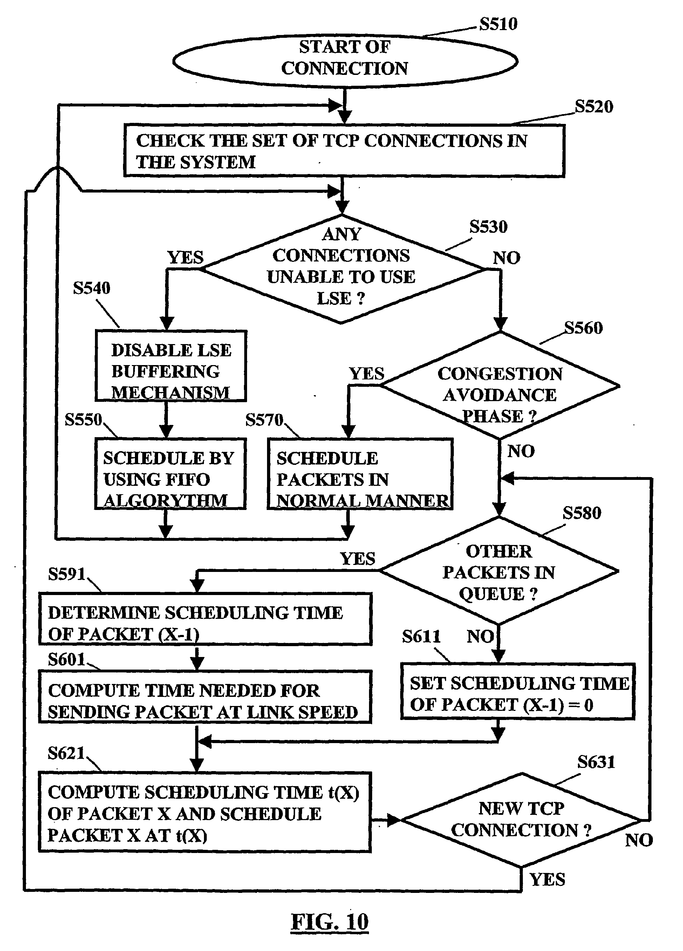

Next, a second example according to the second embodiment is described in connection with Fig. 10. The second example of the second embodiment is a modification of the first example. The differences of this second example to the first example are described in connection with the flow chart according to Fig. 10.

As shown in Fig. 10, steps S510 to S580 to be executed in the scheduling mechanism of the second embodiment are equivalent to those described in the first embodiment. Thus, for the sake of simplicity, a detailed description thereof is omitted.

After step S580, i.e. after the determination of whether or not there are any other packets in the queue, in case the decision in step S580 is NO, i.e. there are no other packets in the queue, step S611 is executed. In step S611, a "virtual" preceding packet (X-1) is assumed whose scheduling time is set to be zero. Then, step S621 is executed which will be described below.

On the other hand, if the decision in step S580 is YES, i.e. there is at least one packet ahead of the current packet in the queue, steps S591 and S601 are executed. Similarly to the first example, in step S591, the sender determines the scheduling time (or departure time) of a preceding packet (X-1) in the queue, which time is referred to also as T. It is to be noted that the preceding packet (X-1) may also belong to a different TCP connection.

Then, in step S601, the time which is required for sending the current packet X at the link speed of the connection is computed in the sender.

After step S601, the process proceeds to step S621 which is also executed, as mentioned above, after step S611. In step S621, the scheduling time for the current packet X is computed on the basis of the scheduling time of the preceding packet (X-1), a packet size of the current packet X (which is to be detected by the sender or can be derived from information contained in the current packet (not shown)) and a LSE-parameter to be set. In other words, a scheduling time for the packet X is calculated in the form

$$t(X) = T + pkt\_size (X)/LSE,$$

where pkt_size (X) is a value indicating the size of the current packet (X) and LSE is a value for the link speed emulation.

When the decision in step S580 is NO, the scheduling time of the (virtual) packet (X-1) is set to zero so that the calculation in step S621 is also valid for a first packet in the queue.

The value of LSE is, for example, the maximum link speed of the connection. Furthermore, the LSE value is derived from the estimated Round Trip Time (RTT) for the connection, wherein it is calculated by means of

$$LSE = congestion\_window/RTT,$$

where congestion_window is the TCP's window size for the connection whose packet is to be scheduled.

When the scheduling time t(X) is calculated, the sender schedules the packet X accordingly in the queue.

After the scheduling of the packet in step S621, step S631 is executed. Similarly to step S630 of Fig. 9, it is checked whether any new connection is established at the sender and/or the receiver. If the decision in step S631 is NO, i.e. no new connections are detected, the process returns to step S580 in order to process remaining packets. On the other hand, when the decision in step S631 is YES, i.e. there is at least one new connection, the process returns to step S530 in order to check whether the new connection(s) is/are using the LSE buffering. This is to be performed in order to ensure that the LSE buffering is disabled when any of end nodes (sender/receiver) for the set of established connections is not able to perform the scheduling mechanism described above.

In this second example, the TCP sender emulates the bottleneck router more closely than the scheme described in the first example of the second embodiment.

In both of the first and second examples of the second embodiment, by setting the value of the link speed used for the LSE parameter at a suitable value, it is possible to prevent an end-to-end delay being deteriorated in comparison with a case without using the LSE buffering. In other words, it is achievable that the amount of (delay at server caused by LSE buffering + buffering delay at bottleneck (e.g. SGSN)) is not worse than (buffering delay at bottleneck) in the conventional case without LSE buffering. This is achievable, for example, if the used value for the link speed is set to the upper bound of the actual link speed.

Furthermore, a penalizing traffic from the server where LSE buffering is implemented compared to traffic from other servers where LSE buffering is not implemented can be prevented by using an explicit signalling from the TCP receiver to the sender to disable the LSE buffering if there is traffic from other non-LSE buffering sources.

The second embodiment is in particular advantageous in that there is no need for changes in the network infrastructure. Thus, the scheduling mechanism according to the second embodiment is generally applicable in all existing packet based networks as long as the sender and receiver nodes are able to implement this scheduling scheme using LSE buffering. Furthermore, this scheduling mechanism allows a TCP server to speed up the throughput in congestion avoidance. Moreover, this scheduling mechanism also speeds up the slow start as compared to other connections. The latter one is achievable by delaying all packets by the LSE mechanism described in the second embodiment and then prioritizing the "smaller buffers" (e.g. by the scheme described in the first embodiment), or by delaying all packets (connections) excluding the slow starting connections which are not delayed (which means that they are prioritized over the other connections).

Even though the examples of the scheduling mechanisms according to the first and second embodiments are described in connection with TCP, it is also possible to combine each of them with other types of transport protocols. Moreover, the limits for the parameters used in the scheduling mechanisms can be varied so as to adopt the mechanisms to a specific network application.

As described above, an improved scheduling mechanism usable for a data transmission in a packet based network is provided. A plurality of connections is detected , and for each of the connections, a buffer occupancy level is determined. Then, the connections having a smaller buffer occupancy level are prioritized in comparison to the other connections, and packets of the plurality of connections are scheduled on the basis of the result of the prioritizing. The scheduling mechanism is implemented in a network element of the packet based network or in a sender and receiver.

It should be understood that the above description and accompanying figures are merely intended to illustrate the present invention by way of example only. The described embodiments of the present invention may thus vary within the scope of the attached claims.

It should be understood that the above description and accompanying figures are merely intended to illustrate the present invention by way of example only. The described embodiments of the present invention may thus vary within the scope of the attached claims.

**Claims**

1. A method of forwarding data in a packet based network, the method comprising the steps of:

   detecting (S20) a plurality of connections;
   determining (S40) a buffer occupancy level for each of the plurality of connections,
   prioritizing (S70) the connections having a smaller buffer occupancy level in comparison to the other connections,
   scheduling (S90) packets of the plurality of connections on the basis of the result of the prioritizing step, and
   allocating a priority indication to each of the plurality of connections on the basis of the determined buffer occupancy level,
   **characterized in that**
   the step of determining (S40) the buffer occupancy level comprises a step of computing the buffer occupancy of a respective connection on the basis of an equation

$$occupancy(i) = \frac{bytes\_enqueued\_for\_(i)}{\sum_{j=1}^{N} bytes\_enqueued\_for\_(j)};$$

   where i indicates the respective connection, occupancy(i) indicates the buffer occupancy level of the respective connection, bytes_enqueued_for indicates the number of bytes of a respective connection enqueued in the buffer, and N indicates the total number of the plurality of connections,
   the step of allocating (S70) the priority indication comprises a step of assigning a probability value which defines a transmission probability of a packet of the respective connection to each of the plurality of connections on the basis of the buffer occupancy level on the basis of an equation

$$sched\_priority(i) = \frac{1 - occupancy(i)}{N - 1};$$

   where i indicates the respective connection, sched_priority(i) indicates the probability value which defines a transmission probability of a packet of the respective connection, occupancy(i) indicates the buffer occupancy level of the respective connection, and N indicates the total number of the plurality of connections.

2.  The method according to claim 1, further comprising a step of identifying (S30) a packet transmitted on a connection of a specific type.

3.  The method according to claim 1 or 2, wherein the step of determining (S40) the buffer occupancy level determines the buffer occupancy level in a buffer (8) of a network element (1).

4.  The method according to claim 1, wherein in the step of allocating (S70) a priority indication a higher priority level is allocated to a connection having a smaller buffer occupancy level than the other connections.

5.  The method according to claim 1 or 4, further comprising a step of updating (S130, S150) the priority indication allocated to each of the plurality of connections when a new packet is received via at least one of the plurality of connections.

6.  The method according to one of claims 1 to 5, further comprising a step of comparing (S50) the determined buffer occupancy level of each of the plurality of connections with a predetermined parameter for deciding on the kind of the allocation of the priority indication.

7.  The method according to claim 6, wherein the step of comparing (S50) the determined buffer occupancy level of each of the plurality of connections with a predetermined parameter is based on a relation

$$occupancy(i) < \frac{1}{N} - \delta;$$

where i indicates the respective connection, occupancy(i) indicates the buffer occupancy level of the respective connection, N indicates the total number of the plurality of connections, and $\delta$ indicates a configurable parameter satisfying a relation

$$0 < \delta < \frac{1}{N}.$$

8.  The method according to claim 1, wherein a step of processing (S80) the priority indications of each of the plurality of connections comprises a step of ordering (S90) the connections in a ranking according to the probability values of each of the plurality of connections.

9.  The method according to claim 8, wherein the step of scheduling (S90) the data packets of each of the plurality of connections comprises substeps of
    generating (S100) a random number,
    selecting (S110) the connection of the plurality of connections on basis of a comparison between the rankings of each of the plurality of connections and the random number, and
    scheduling a packet of the selected connection for transmitting it.

10. The method according to claim 9, wherein in the step of selecting (S110) the connection a connection is selected whose ranking is greater than the random number and closest to the random number.

11. The method according to any of claims 9 to 10, wherein the step of scheduling (S90) the data packets is repeated.

12. A device (1) for controlling forwarding of data in a packet based network, the device comprising:

    detecting means (2) for detecting a plurality of connections;
    determining means (4) for determining a buffer occupancy level of each of the plurality of connections;

prioritizing means (5) for prioritizing the connections having a smaller buffer occupancy level in comparison to the other connections;

scheduling means (7) for scheduling packets of the plurality of connections on the basis of the result obtained by the prioritizing means; and

allocating means (5) for allocating a priority indication to each of the plurality of connections on the basis of the determined buffer occupancy level,

**characterized in that**

the determining means (4) is adapted to compute the buffer occupancy on basis of an equation

$$occupancy(i) = \frac{bytes\_enqueued\_for\_(i)}{\sum_{j=1}^{N} bytes\_enqueued\_for\_(j)};$$

where i indicates the respective connection, occupancy(i) indicates the buffer occupancy level of the respective connection, bytes_enqueued_for indicates the number of bytes of a respective connection enqueued in the buffer, and N indicates the total number of the plurality of connections,

said allocating means (5) is adapted to assign a probability value which defines a transmission probability of a packet of the respective connection to each of the plurality of connections on the basis of the buffer occupancy level, on the basis of an equation

$$sched\_priority(i) = \frac{1 - occupancy(i)}{N - 1};$$

where i indicates the respective connection, sched_priority(i) indicates the probability value which defines a transmission probability of a packet of the respective connection, occupancy(i) indicates the buffer occupancy level of the respective connection, and N indicates the total number of the plurality of connections.

13. The device according to claim 12, further comprising identifying means (3) for identifying a packet transmitted on a connection of a specific type.

14. The device according to claim 12 or 13, wherein the determining means (4) determines the buffer occupancy level in a buffer (8) of a network element.

15. The device according to claim 14, wherein the allocating means (5) is adapted to allocate a higher priority level to a connection having a smaller buffer occupancy level than the other connections.

16. The device according to claim 14 or 15, wherein the device (1) is adapted to update the priority indication allocated to each of the plurality of connections when a new packet is received via at least one of the plurality of connections.

17. The device according to one of claims 14 to 16, wherein the determining means (4) is adapted to determine the buffer occupancy level by computing the buffer occupancy of a respective connection by comparing the number of bytes of one of the plurality of connections with the number of bytes of all of the plurality of connections.

18. The device according to one of claims 14 to 18, further comprising means for comparing the determined buffer occupancy level of each of the plurality of connections with a predetermined parameter and means for deciding on the kind of the allocation of the priority indication on the basis of the comparison.

19. The device according to claim 18, wherein means for comparing the determined buffer occupancy level of each of the plurality of connections with a predetermined parameter is adapted to check a relation

$$occupancy(i) < \frac{1}{N} - \delta;$$

where i indicates the respective connection, occupancy(i) indicates the buffer occupancy level of the respective connection, N indicates the total number of the plurality of connections, and $\delta$ indicates a configurable parameter satisfying a relation

$$0 < \delta < \frac{1}{N}.$$

20. The device according to claim 12, wherein means (6) for processing the priority indications of each of the plurality of connections is provided and adapted to order the connections in a ranking according to the probability values of each of the plurality of connections.

21. The device according to claim 20, wherein the scheduling means (7) is adapted to
generate a random number,
to select the connection of the plurality of connections on basis of a comparison between the rankings of each of the plurality of connections and the random number, and
to schedule a data packet of the selected connection for a transmission.

22. The device according to claim 21, wherein in the selection of the connection, the scheduling means (7) is adapted to select a connection whose ranking is greater than the random number and closest to the random number.

23. The device according to any of claims 21 to 22, wherein the scheduling means (7) is adapted to repeat the scheduling of the data packets.

24. A communication network system in which a packet based data transmission is executable, the system comprising at least one network node usable for controlling the data transmission, wherein the network node comprises the device according to one of claims 12 to 23.

25. The communication network system according to claim 24, wherein the network node is a router.

26. The communication network system according to claim 24, wherein the network node is a serving support node of a packet based radio service.

27. A computer program product comprising processor implementable instructions for controlling a processor to execute the method according to one of claims 1 to 11.

**Patentansprüche**

1. Verfahren zum Weiterleiten von Daten in einem auf Paketen basierenden Netzwerk, wobei das Verfahren Schritte umfasst:

   zum Erfassen (S20) einer Vielzahl von Verbindungen,
   zum Bestimmten (S40) eines Pufferbelegungspegels für jede der Vielzahl von Verbindungen,
   zum Priorisieren (S70) der Verbindungen, die einen kleineren Pufferbelegungspegel im Vergleich zu den anderen Verbindungen aufweisen,
   zum Einteilen (S90) von Paketen der Vielzahl von Verbindungen auf der Grundlage des Ergebnisses des Priorisierungsschrittes, und
   zum Zuordnen einer Prioritätsangabe zu jeder der Vielzahl von Verbindungen auf der Grundlage des bestimmten Pufferbelegungspegels,

**dadurch gekennzeichnet, dass**
der Schritt zum Bestimmen (S40) des Pufferbelegungspegels einen Schritt zum Berechnen der Pufferbelegung einer jeweiligen Verbindung auf der Grundlage einer Gleichung

$$occupancy(i) = \frac{bytes\_enqueued\_for\_(i)}{\sum_{j=1}^{N} bytes\_enqueued\_for\_(j)};$$

umfasst,
wobei i die jeweilige Verbindung angibt, occupancy(i) den Pufferbelegungspegel der jeweiligen Verbindung angibt, bytes_enqueued_for die Anzahl von Bytes einer jeweiligen Verbindung angibt, die in dem Puffer eingereiht ist, und N die Gesamtanzahl der Vielzahl von Verbindungen angibt,
der Schritt zum Zuordnen (S70) der Prioritätsangabe einen Schritt zum Zuweisen eines Wahrscheinlichkeitswerts, der eine Übertragungswahrscheinlichkeit eines Pakets der jeweiligen Verbindung definiert, zu jeder der Vielzahl von Verbindungen auf der Grundlage des Pufferbelegungspegels auf der Grundlage einer Gleichung

$$sched\_priority(i) = \frac{1 - occupancy(i)}{N-1};$$

umfasst,
wobei i die jeweilige Verbindung angibt, sched_priority(i) den Wahrscheinlichkeitswert angibt, der einer Übertragungswahrscheinlichkeit eines Pakets der jeweiligen Verbindung definiert, occupancy(i) den Pufferbelegungspegel der jeweiligen Verbindung angibt und N die Gesamtanzahl der Vielzahl von Verbindungen angibt.

2. Verfahren nach Anspruch 1, ferner mit einem Schritt zum Identifizieren (S30) eines Pakets, das auf einer Verbindung eines spezifischen Typs übertragen wird.

3. Verfahren nach Anspruch 1 oder 2, wobei der Schritt zum Bestimmen (S40) des Pufferbelegungspegels den Pufferbelegungspegel in einem Puffer (8) eines Netzwerkelements (1) bestimmt.

4. Verfahren nach Anspruch 1, wobei in dem Schritt zum Zuordnen (S70) einer Prioritätsangabe ein höherer Prioritätspegel einer Verbindung zugeordnet wird, die einen kleineren Pufferbelegungspegel als die anderen Verbindungen aufweist.

5. Verfahren nach Anspruch 1 oder 4, ferner mit einem Schritt zum Aktualisieren (S130, S150) der Prioritätsangabe, die jeder der Vielzahl von Verbindungen zugeordnet wird, wenn ein neues Paket über zumindest eine der Vielzahl von Verbindungen empfangen wird.

6. Verfahren nach einem der Ansprüche 1 bis 5, ferner mit einem Schritt zum Vergleichen (S50) des bestimmten Pufferbelegungspegels jeder der Vielzahl von Verbindungen mit einem vorbestimmten Parameter zum Festlegen der Art der Zuordnung der Prioritätsangabe.

7. Verfahren nach Anspruch 6, wobei der Schritt zum Vergleichen (S50) des bestimmten Pufferbelegungspegels jeder der Vielzahl von Verbindungen mit einem vorbestimmten Parameter auf einer Beziehung

$$occupancy(i) < \frac{1}{N} - \delta;$$

beruht,

wobei i die jeweilige Verbindung angibt, occupancy(i) den Pufferbelegungspegel der jeweiligen Verbindung angibt, N die Gesamtanzahl der Vielzahl von Verbindungen angibt und δ einen konfigurierbaren Parameter angibt, der eine Beziehung

$$0 < \delta < \frac{1}{N}.$$

erfüllt.

8. Verfahren nach Anspruch 1, wobei ein Schritt zum Verarbeiten (S80) der Prioritätsangaben jeder der Vielzahl von Verbindungen einen Schritt zum Ordnen (S90) der Verbindungen in einer Rangordnung entsprechend den Wahrscheinlichkeitswerten jeder der Vielzahl von Verbindungen umfasst.

9. Verfahren nach Anspruch 8, wobei der Schritt zum Einteilen (S90) der Datenpakete jeder der Vielzahl von Verbindungen Unterschritte umfasst
zum Erzeugen (S100) einer Zufallszahl,
zum Auswählen (S110) der Verbindung aus der Vielzahl von Verbindungen auf der Grundlage eines Vergleichs zwischen den Rangordnungen jeder der Vielzahl von Verbindungen und der Zufallszahl, und
zum Einteilen eines Pakets der ausgewählten Verbindung für eine Übertragung hiervon.

10. Verfahren nach Anspruch 9, wobei in dem Schritt zum Auswählen (S110) der Verbindung eine Verbindung ausgewählt wird, deren Rangordnung größer ist als die Zufallszahl und am nächsten zu der Zufallszahl ist.

11. Verfahren nach einem der Ansprüche 9 bis 10, wobei der Schritt zum Einteilen (S90) der Datenpakete wiederholt wird.

12. Vorrichtung (1) zur Steuerung einer Weiterleitung von Daten in einem auf Paketen basierenden Netzwerk, wobei die Vorrichtung umfasst:

eine Erfassungseinrichtung (20) zur Erfassung einer Vielzahl von Verbindungen,
eine Bestimmungseinrichtung (40) zur Bestimmung eines Pufferbelegungspegels jeder der Vielzahl von Verbindungen,
eine Priorisierungseinrichtung (50) zur Priorisierung der Verbindungen, die einen kleineren Pufferbelegungspegel im Vergleich zu den anderen Verbindungen aufweisen,
einer Einteilungseinrichtung (70) zur Einteilung von Paketen der Vielzahl von Verbindungen auf der Grundlage des Ergebnisses, das durch die Priorisierungseinrichtung erhalten wird, und
eine Zuordnungseinrichtung (50) zum Zuordnen einer Prioritätsangabe zu jeder der Vielzahl von Verbindungen auf der Grundlage des bestimmten Pufferbelegungspegels,
**dadurch gekennzeichnet, dass**
die Bestimmungseinrichtung (4) eingerichtet ist, die Pufferbelegung auf der Grundlage einer Gleichung

$$occupancy(i) = \frac{bytes\_enqueued\_for\_(i)}{\sum_{j=1}^{N} bytes\_enqueued\_for\_(j)};$$

zu berechnen,
wobei i die jeweilige Verbindung angibt, occupancy(i) den Pufferbelegungspegel der jeweiligen Verbindung angibt, bytes_enqueued_for die Anzahl von Bytes einer jeweiligen Verbindung angibt, die in dem Puffer eingereiht sind, und N die Gesamtanzahl der Vielzahl von Verbindungen angibt,
die Zuordnungseinrichtung (5) eingerichtet ist, einen Wahrscheinlichkeitswert, der eine Übertragungswahrscheinlichkeit eines Pakets der jeweiligen Verbindung definiert, zu jeder der Vielzahl von Verbindungen auf der Grundlage des Pufferbelegungspegels zuzuweisen, auf der Grundlage einer Gleichung

$$sched\_priority(i) = \frac{1 - occupancy(i)}{N - 1};$$

wobei i die jeweilige Verbindung angibt, sched_priority(i) den Wahrscheinlichkeitswert angibt, der eine Übertragungswahrscheinlichkeit eines Pakets der jeweiligen Verbindung definiert, occupancy(i) den Pufferbelegungspegel der jeweiligen Verbindung angibt und N die Gesamtanzahl der Vielzahl von Verbindungen angibt.

**13.** Vorrichtung nach Anspruch 12, ferner mit einer Identifikationseinrichtung (3) zur Identifikation eines Pakets, das auf einer Verbindung eines spezifischen Typs übertragen wird.

**14.** Vorrichtung nach Anspruch 12 oder 13, wobei die Bestimmungseinrichtung (4) den Pufferbelegungspegel in einem Puffer (8) eines Netzwerkelements bestimmt.

**15.** Vorrichtung nach Anspruch 14, wobei die Zuordnungseinrichtung (5) eingerichtet ist, einer Verbindung, die einen kleineren Pufferbelegungspegel als die anderen Verbindungen aufweist, einen höheren Prioritätspegel zuzuordnen.

**16.** Vorrichtung nach Anspruch 14 oder 15, wobei die Vorrichtung (1) eingerichtet ist, die Prioritätsangabe, die jeder der Vielzahl von Verbindungen zugeordnet ist, zu aktualisieren, wenn ein neues Paket über zumindest eine der Vielzahl von Verbindungen empfangen wird.

**17.** Vorrichtung nach einem der Ansprüche 14 bis 16, wobei die Bestimmungseinrichtung (4) eingerichtet ist, den Pufferbelegungspegel zu bestimmen, indem die Pufferbelegung einer jeweiligen Verbindung berechnet wird, indem die Anzahl von Bytes einer der Vielzahl von Verbindungen mit der Anzahl von Bytes aller der Vielzahl von Verbindungen verglichen wird.

**18.** Vorrichtung nach einem der Ansprüche 14 bis 18, ferner mit einer Einrichtung zum Vergleichen des bestimmten Pufferbelegungspegels jeder der Vielzahl von Verbindungen mit einem vorbestimmten Parameter und einer Einrichtung zur Festlegung der Art der Zuordnung der Prioritätsangabe auf der Grundlage des Vergleichs.

**19.** Vorrichtung nach Anspruch 18, wobei die Einrichtung zum Vergleichen des bestimmten Pufferbelegungspegels jeder der Vielzahl von Verbindungen mit einem vorbestimmten Parameter eingerichtet ist, eine Beziehung

$$occupancy(i) < \frac{1}{N} - \delta;$$

zu überprüfen,
wobei i die jeweilige Verbindung angibt, occupancy(i) den Pufferbelegungspegel der jeweiligen Verbindung angibt, N die Gesamtanzahl der Vielzahl von Verbindungen angibt und $\delta$ einen konfigurierbaren Parameter angibt, der eine Beziehung

$$0 < \delta < \frac{1}{N}.$$

erfüllt.

**20.** Vorrichtung nach Anspruch 12, wobei eine Einrichtung (6) zur Verarbeitung der Prioritätsangaben jeder der Vielzahl von Verbindungen bereitgestellt ist und diese eingerichtet ist, die Verbindungen in einer Rangordnung entsprechend den Wahrscheinlichkeitswerten jeder der Vielzahl von Verbindungen zu ordnen.

**21.** Vorrichtung nach Anspruch 20, wobei die Einteilungseinrichtung (7) eingerichtet ist, eine Zufallszahl zu erzeugen,

die Verbindung aus der Vielzahl von Verbindungen auf der Grundlage eines Vergleichs zwischen den Rangordnungen jeder der Vielzahl von Verbindungen und der Zufallszahl auszuwählen, und
ein Datenpaket der ausgewählten Verbindung für eine Übertragung einzuteilen.

**22.** Vorrichtung nach Anspruch 21, wobei bei der Auswahl der Verbindung die Einteilungseinrichtung (7) eingerichtet ist, eine Verbindung auszuwählen, deren Rangordnung größer als die Zufallszahl und am nächsten zu der Zufallszahl ist.

**23.** Vorrichtung nach einem der Ansprüche 21 bis 22, wobei die Einteilungseinrichtung (7) eingerichtet ist, die Einteilung der Datenpakete zu wiederholen.

**24.** Kommunikationsnetzwerksystem, in dem eine auf Paketen basierende Datenübertragung ausführbar ist, wobei das System zumindest einen Netzwerkknoten umfasst, der nutzbar ist, um die Datenübertragung zu steuern, wobei der Netzwerkknoten die Vorrichtung nach einem der Ansprüche 12 bis 23 umfasst.

**25.** Kommunikationsnetzwerkssystem nach Anspruch 24, wobei der Netzwerkknoten ein Router ist.

**26.** Kommunikationsnetzwerksystem nach Anspruch 24, wobei der Netzwerkknoten ein Dienstunterstützungsknoten eines auf Paketen basierenden Funkdienstes ist.

**27.** Computerprogrammprodukt mit in einer Verarbeitungsvorrichtung implementierbaren Anweisungen zur Steuerung einer Verarbeitungsvorrichtung, um das Verfahren gemäß einem der Ansprüche 1 bis 11 auszuführen.

**Revendications**

**1.** Procédé destiné à acheminer des données dans un réseau à base de paquets, le procédé comportant les étapes ci-dessous consistant à :

détecter (S20) une pluralité de connexions ;
déterminer (S40) un niveau d'occupation de mémoire tampon pour chaque connexion de la pluralité de connexions ;
donner la priorité (S70) aux connexions présentant un niveau d'occupation de mémoire tampon inférieur à celui des autres connexions ;
planifier (S90) les paquets de la pluralité de connexions sur la base du résultat de l'étape d'affection de priorité ; et affecter une indication de priorité à chaque connexion de la pluralité de connexions sur la base du niveau d'occupation de mémoire tampon déterminé, **caractérisé en ce que** :

l'étape consistant à déterminer (S40) le niveau d'occupation de mémoire tampon comprend une étape consistant à calculer l'occupation de mémoire tampon d'une connexion respective sur la base de l'équation ci-dessous :

$$occupation(i) = \frac{octets\_mis\ en\ file\ d'attente\_pour\_(i)}{\sum_{j=1}^{N} octets\_mis\ en\ file\ d'attente\_pour\_(i)} \ ;$$

où i indique la connexion respective, occupation(i) indique le niveau d'occupation de mémoire tampon de la connexion respective, octets_mis en file d'attente pour indique le nombre d'octets d'une connexion respective mis en file d'attente dans la mémoire tampon, et N indique le nombre total de la pluralité de connexions ;
l'étape consistant à affecter (S70) l'indication de priorité comprend une étape consistant à attribuer une valeur de probabilité qui définit une probabilité de transmission d'un paquet de la connexion respective à chaque connexion de la pluralité de connexions sur la base du niveau d'occupation de mémoire tampon,

sur la base de l'équation ci-dessous :

$$priorité\_planifiée(i) = \frac{1 - occupation(i)}{N - 1} \; ;$$

où i indique la connexion respective, *priorité_planifiée(i)* indique la valeur de probabilité qui définit une probabilité de transmission d'un paquet de la connexion respective, occupation(i) indique le niveau d'occupation de mémoire tampon de la connexion respective, et N indique le nombre total de la pluralité de connexions.

2. Procédé selon la revendication 1, comprenant en outre une étape consistant à identifier (S30) un paquet transmis sur une connexion d'un type spécifique.

3. Procédé selon la revendication 1 ou 2, dans lequel l'étape consistant à déterminer (S40) le niveau d'occupation de mémoire tampon détermine le niveau d'occupation de mémoire tampon dans une mémoire tampon (8) d'un élément de réseau (1).

4. Procédé selon la revendication 1, dans lequel, dans l'étape consistant à affecter (S70) une indication de priorité, un niveau de priorité supérieur est attribué à une connexion présentant un niveau d'occupation de mémoire tampon inférieur à celui des autres connexions.

5. Procédé selon la revendication 1 ou 4, comprenant en outre une étape consistant à mettre à jour (S130, S150) l'indication de priorité affectée à chaque connexion de la pluralité de connexions lorsqu'un nouveau paquet est reçu via au moins une connexion de la pluralité de connexions.

6. Procédé selon l'une quelconque des revendications 1 à 5, comprenant en outre une étape consistant à comparer (S50) le niveau d'occupation de mémoire tampon déterminé de chaque connexion de la pluralité de connexions à un paramètre prédéterminé, en vue de déterminer le type d'affectation de l'indication de priorité.

7. Procédé selon la revendication 6, dans lequel l'étape consistant à comparer (S50) le niveau d'occupation de mémoire tampon déterminé de chaque connexion de la pluralité de connexions à un paramètre prédéterminé est basée sur la relation ci-dessous :

$$occupation(i) < \frac{1}{N} - \delta \; ;$$

où i indique la connexion respective, occupation(i) indique le niveau d'occupation de mémoire tampon de la connexion respective, N indique le nombre total de la pluralité de connexions, et $\delta$ indique un paramètre configurable satisfaisant la relation ci-dessous

$$0 < \delta < \frac{1}{N}.$$

8. Procédé selon la revendication 1, dans lequel une étape consistant à traiter (S80) les indications de priorité de chaque connexion de la pluralité de connexions comprend une étape consistant à ordonnancer (S90) les connexions dans un classement selon les valeurs de probabilité de chaque connexion de la pluralité de connexions.

9. Procédé selon la revendication 8, dans lequel l'étape consistant à planifier (S90) les paquets de données de chaque connexion de la pluralité de connexions comprend les sous-étapes ci-dessous consistant à :

générer (S 100) un nombre aléatoire ;

sélectionner (S 110) la connexion de la pluralité de connexions sur la base d'une comparaison entre les classements de chaque connexion de la pluralité de connexions et le nombre aléatoire ; et
planifier un paquet de la connexion sélectionnée en vue de le transmettre.

**10.** Procédé selon la revendication 9, dans lequel, dans l'étape consistant à sélectionner (S 110) la connexion, est sélectionnée une connexion dont le classement est supérieur au nombre aléatoire et le plus proche du nombre aléatoire.

**11.** Procédé selon l'une quelconque des revendications 9 à 10, dans lequel l'étape consistant à planifier (S90) les paquets de données est répétée.

**12.** Dispositif (1) destiné à commander l'acheminement de données dans un réseau à base de paquets, le dispositif comportant :

un moyen de détection (2) pour détecter une pluralité de connexions ;
un moyen de détermination (4) pour déterminer un niveau d'occupation de mémoire tampon de chaque connexion de la pluralité de connexions ;
un moyen d'attribution de priorité (5) pour donner la priorité aux connexions présentant un niveau d'occupation de mémoire tampon inférieur à celui des autres connexions ;
un moyen de planification (7) pour planifier les paquets de la pluralité de connexions sur la base du résultat obtenu par le moyen d'affection de priorité ; et
un moyen d'affectation (5) pour affecter une indication de priorité à chaque connexion de la pluralité de connexions sur la base du niveau d'occupation de mémoire tampon déterminé,
**caractérisé en ce que**
le moyen de détermination (4) est apte à calculer l'occupation de mémoire tampon sur la base de l'équation ci-dessous :

$$occupation(i) = \frac{octets\_mis\ en\ file\ d'attente\_pour\_(i)}{\sum_{j=1}^{N} octets\_mis\ en\ file\ d'attente\_pour\_(i)} \; ;$$

où i indique la connexion respective, occupation(i) indique le niveau d'occupation de mémoire tampon de la connexion respective, octets_mis en file d'attente pour indique le nombre d'octets d'une connexion respective mis en file d'attente dans la mémoire tampon, et N indique le nombre total de la pluralité de connexions ;
ledit moyen d'affectation (5) est apte à attribuer une valeur de probabilité qui définit une probabilité de transmission d'un paquet de la connexion respective à chaque connexion de la pluralité de connexions sur la base du niveau d'occupation de mémoire tampon, sur la base de l'équation ci-dessous :

$$priorité\_planifiée(i) = \frac{1 - occupation(i)}{N - 1} \; ;$$

où i indique la connexion respective, *priorité_planifiée(i)* indique la valeur de probabilité qui définit une probabilité de transmission d'un paquet de la connexion respective, occupation(i) indique le niveau d'occupation de mémoire tampon de la connexion respective, et N indique le nombre total de la pluralité de connexions.

**13.** Dispositif selon la revendication 12, comprenant en outre un moyen d'identification (3) pour identifier un paquet transmis sur une connexion d'un type spécifique.

**14.** Dispositif selon la revendication 12 ou 13, dans lequel le moyen de détermination (4) détermine le niveau d'occupation de mémoire tampon dans une mémoire tampon (8) d'un élément de réseau.

**15.** Dispositif selon la revendication 14, dans lequel le moyen d'affectation (5) est apte à attribuer un niveau de priorité supérieur à une connexion présentant un niveau d'occupation de mémoire tampon inférieur à celui des autres connexions.

**16.** Dispositif selon la revendication 14 ou 15, dans lequel le dispositif (1) est apte à mettre à jour l'indication de priorité affectée à chaque connexion de la pluralité de connexions, lorsqu'un nouveau paquet est reçu via au moins une connexion de la pluralité de connexions.

**17.** Dispositif selon l'une quelconque des revendications 14 à 16, dans lequel le moyen de détermination (4) est apte à déterminer le niveau d'occupation de mémoire tampon en calculant l'occupation de mémoire tampon d'une connexion respective en comparant le nombre d'octets d'une connexion de la pluralité de connexions au nombre d'octets de l'ensemble de la pluralité de connexions.

**18.** Dispositif selon l'une quelconque des revendications 14 à 18, comprenant en outre un moyen pour comparer le niveau d'occupation de mémoire tampon déterminé de chaque connexion de la pluralité de connexions à un paramètre prédéterminé, et un moyen pour déterminer le type d'affectation de l'indication de priorité sur la base de la comparaison.

**19.** Dispositif selon la revendication 18, dans lequel le moyen pour comparer le niveau d'occupation de mémoire tampon déterminé de chaque connexion de la pluralité de connexions à un paramètre prédéterminé est apte à vérifier la relation ci-dessous :

$$occupation(i) < \frac{1}{N} - \delta \ ;$$

où i indique la connexion respective, occupation(i) indique le niveau d'occupation de mémoire tampon de la connexion respective, N indique le nombre total de la pluralité de connexions, et δ indique un paramètre configurable satisfaisant la relation ci-dessous

$$0 < \delta < \frac{1}{N}.$$

**20.** Dispositif selon la revendication 12, dans lequel un moyen (6) pour traiter les indications de priorité de chaque connexion de la pluralité de connexions est fourni et est apte à ordonnancer les connexions dans un classement selon les valeurs de probabilité de chaque connexion de la pluralité de connexions.

**21.** Dispositif selon la revendication 20, dans lequel le moyen de planification (7) est apte à :

générer un nombre aléatoire ;
sélectionner la connexion de la pluralité de connexions sur la base d'une comparaison entre les classements de chaque connexion de la pluralité de connexions et le nombre aléatoire ; et
planifier un paquet de données de la connexion sélectionnée en vue d'une transmission.

**22.** Dispositif selon la revendication 21, dans lequel, lors de la sélection de la connexion, le moyen de planification (7) est apte à sélectionner une connexion dont le classement est supérieur au nombre aléatoire et le plus proche du nombre aléatoire.

**23.** Dispositif selon l'une quelconque des revendications 21 à 22, dans lequel le moyen de planification (7) est apte à répéter la planification des paquets de données.

**24.** Système de réseau de communication dans lequel une transmission de données à base de paquets est exécutable, le système comprenant au moins un noeud de réseau utilisable pour commander la transmission de données, dans lequel le noeud de réseau comprend le dispositif selon l'une quelconque des revendications 12 à 23.

**25.** Système de réseau de communication selon la revendication 24, dans lequel le noeud de réseau est un routeur.

**26.** Système de réseau de communication selon la revendication 24, dans lequel le noeud de réseau est un noeud de prise en charge de desserte d'un service radio à base de paquets.

**27.** Produit-programme informatique comprenant des instructions pouvant être mises en oeuvre dans un processeur en vue d'amener un processeur à exécuter le procédé selon l'une quelconque des revendications 1 à 11.

**FIG. 1**

INCOMING CONNECTIONS

TRANSMISSION OF PACKET

1

2 DETECTOR FOR TCP CONNECTION

3 IDENTIFICATION DATA PACKETS

BUFFER

8

4 DETERMINATION OF BUFFER OCCUPANCY

7 SCHEDULER

5 ALLOCATION PRIORITY INDICATION

6 PROCESSOR PRIORITY INDICATION

EP 1 730 903 B1

S10

SCHEDULING
MECHANISM

S20

DETECT TCP CONNECTIONS

S30

IDENTIFY PACKETS INCOMING FOR A
RESPECTIVE TCP CONNECTION

S40

DETERMINE BUFFER OCCUPANCY LEVEL:

$$occupancy\ (i) = \frac{bytes\_enqueued\_for\_(i)}{\sum\limits_{j=1}^{N} bytes\_enqueued\_for\_(j)};$$

S50

NO

$$occupancy(i) < \frac{1}{N} - \delta\ ?$$

S60

ALTERNATIVE
SCHEDULING (FIFO)

YES

S70

ALLOCATE PRIORITY INDICATION BY
CALCULATING PROBABILITY VALUE:

$$sched\_priority(i) = \frac{1 - occupancy(i)}{N - 1};$$

S80

PROCESS PRIORITY INDICATION ON BASIS
OF PROBABILITY VALUE

A

**FIG. 2**

A

ORDER TCP CONNECTIONS ON BASIS OF
PROBABILITY VALUE IN PROBABILITY
RANKING                                    S90

GENERATE RANDOM NUMBER BETWEEN
0 AND 1                                    S100

SELECT TCP CONNECTION FOR
TRANSMISSION BY COMPARING RANDOM
NUMBER WITH PROBABILITY RANKING            S110

TRANSMIT PACKET IN BUFFER OF THE TCP
CONNECTION SELECTED                        S120

PACKETS IN BUFFER ?          S130          NO

YES

NEW PACKET ARRIVED ?    S150

NO

YES

GO TO STEP S30              S160

RETURN                     S140

**FIG. 3**

S210

SCHEDULING
MECHANISM

S220

DETECT TCP CONNECTIONS

S230

IDENTIFY PACKETS INCOMING FOR A
RESPECTIVE TCP CONNECTION

S240

DETERMINE BUFFER OCCUPANCY FOR EACH
TCP CONNECTION BY COMPUTING TOTAL
DATA AMOUNT (TOTAL NUMBER OF BYTES)

S250

COMPARE TOTAL DATA AMOUNT WITH
PREDETERMINED UNIQUE THRESHOLD
VALUES bth OF M QUEUES OF THE BUFFER

S260

ASSIGN TCP CONNECTION HAVING A TOTAL
DATA AMOUNT OF B TO A SELECTED QUEUE
q ON THE BASIS OF $bth(q) \leq B < bth(q+1)$

S270

ALLOCATE PRIORITY VALUE P OF
SELECTED QUEUE TO TCP CONNECTION AS
THE PRIORITY INDICATION

S280

ORDER TCP CONNECTIONS ON THE BASIS
OF THE RESPECTIVE PRIORITY INDICATION

B

## FIG. 4

B

S290
TWO
OR MORE TCP
YES
CONNECTIONS HAVING
THE SAME PRIORITY
INDICATION?

S300
ALTERNATIVE
SCHEDULING (FIFO)

NO

S310
SELECT TCP CONNECTION HAVING HIGHEST
PRIORITY INDICATION FOR TRANSMISSION

S320
TRANSMIT PACKET IN BUFFER OF THE TCP
CONNECTION SELECTED

S330
PACKETS IN
BUFFER ?

NO

YES

S340
GO TO STEP S240

S350
RETURN

## FIG. 5

**FIG. 6**

INFORM TCP SENDER THAT
ALL TCP CONNECTIONS GO
THROUGH THE SAME SERVER

```
┌──────────┐                              ┌──────────┐
│   TCP    │         UDP PACKET           │   TCP    │
│ RECEIVER │ ───────────────────────────▶ │  SENDER  │
└──────────┘                              └──────────┘
     │                  SYN                     │
     │  ────────────────────────────────────▶  │
TCP connect ()                                  │
     │               SYN/ACK                    │
     │  ◀───────────────────────────────────   │
```

**FIG. 7**

QUEUE BEFORE ACK IS
RECEIVED

| X-1 | X-2 | X-3 |
|-----|-----|-----|

DEPARTURE TIME OF
PACKET (X-1) = T

STEP S610:
SCHEDULING OF PACKET (X) AT
TIME t(x) = T + (X-1)/LSE-PARAMETER

QUEUE AFTER ACK IS
RECEIVED

| X | X-1 | X-2 | X-3 |
|---|-----|-----|-----|

DEPARTURE TIME t(X) OF
PACKET (X) = T + (X-1)/LSE

| TCP SENDER | TCP RECEIVER |
|------------|--------------|

TCP ACK

**FIG. 8**

EP 1 730 903 B1

START OF
CONNECTION ·········· S510

CHECK THE SET OF TCP CONNECTIONS IN
THE SYSTEM ·········· S520

ANY
CONNECTIONS
UNABLE TO USE
LSE ? ·········· S530

YES

S540

DISABLE LSE
BUFFERING
MECHANISM

S550

SCHEDULE BY
USING FIFO
ALGORYTHM

NO

CONGESTION
AVOIDANCE
PHASE ? ·········· S560

YES

S570

SCHEDULE
PACKETS IN
NORMAL MANNER

NO

YES

OTHER
PACKETS IN
QUEUE ? ·········· S580

S590

DETERMINE SCHEDULING TIME
OF PACKET (X-1)

S600

COMPUTE TIME NEEDED FOR
SENDING PACKET AT LINK SPEED

S610

COMPUTE SCHEDULING TIME t(X)
OF PACKET X AND SCHEDULE
PACKET X AT t(X)

S620  NO

DELAY FIRST
PACKET BY
FIXED AMOUNT

S630

NEW TCP
CONNECTION ?      NO

YES

FIG. 9

START OF
CONNECTION ——S510

——S520

CHECK THE SET OF TCP CONNECTIONS IN
THE SYSTEM

ANY
CONNECTIONS
UNABLE TO USE
LSE ?   S530

YES                              NO

S540

DISABLE LSE
BUFFERING
MECHANISM

CONGESTION
AVOIDANCE
PHASE ?   S560

YES

S550                    S570

SCHEDULE BY
USING FIFO
ALGORYTHM

SCHEDULE
PACKETS IN
NORMAL MANNER

NO

S591

DETERMINE SCHEDULING TIME
OF PACKET (X-1)

YES   OTHER
PACKETS IN
QUEUE ?   S580

S601

COMPUTE TIME NEEDED FOR
SENDING PACKET AT LINK SPEED

S611   NO

SET SCHEDULING TIME
OF PACKET (X-1) = 0

S621

COMPUTE SCHEDULING TIME t(X)
OF PACKET X AND SCHEDULE
PACKET X AT t(X)

NEW TCP
CONNECTION ?   S631

NO

YES

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19907085 C1

### Non-patent literature cited in the description

- **W. STEVENS.** TCP Slow Start, Congestion Avoidance, Fast Retransmit, and Fast Recovery Algorithms. *IETF RFC 2001,* January 1997